# EUROPEAN PATENT SPECIFICATION

(11) **EP 0 315 279 B1**
(45) Date of publication and mention of the grant of the patent: **07.09.1994**
(21) Application number: 88202448.2
(22) Date of filing: 02.11.1988
(51) Int. Cl.: C08G 67/02

(54) **Polymers of carbon monoxide**
Kohlenstoffmonoxyd-Copolymere
Polymère du monoxyde de carbone

(30) Priority: 04.11.1987 NL 8702633
(43) Date of publication of application: 10.05.1989
(73) Proprietor: SHELL INTERNATIONALE RESEARCH MAATSCHAPPIJ B.V., 2596 HR Den Haag (NL)
(72) Inventor: Drent, Eit, NL-1031 CM Amsterdam (NL)

(56) References cited:
- EP-A- 0 137 332
- EP-A- 0 213 671
- EP-A- 0 251 373
- EP-A- 0 264 159
- DE-A- 2 238 555

## Description

The invention relates to a process for the preparation of polymers of carbon monoxide with one or more alpha-olefins and with one or more other mono-olefinically unsaturated compounds.

High molecular weight linear alternating copolymers of carbon monoxide and ethylene can be prepared under the application of catalyst compositions on the basis of
a) a palladium compound,
b) an anion of an acid with a pKa of less than 6, and
c) a diphosphine with the general formula R₁R₂P-R-PR₃R₄ in which R₁ to R₄ represent hydrocarbyl groups optionally substituted by polar groups and R represents a divalent organic bridging group containing at least two carbon atoms in the bridge.

Research carried out by the applicant into these polymers has recently shown that their melting point can be lowered by including in the monomer mixture from which they are prepared one or more other mono-olefins (indicated as A for short) with a terminal double bond. Lower mono-olefins such as propene and butene-1, as well as higher mono-olefins such as dodecene-1, can be used for this purpose. In the course of the research it was also found that carbon monoxide/ethylene copolymers could be chemically modified in situ by introducing into the monomer mixture from which they were prepared one or more mono-olefinically unsaturated compounds (indicated as B for short) in which a carboxylate group (i.e. an oxycarbonyl moiety) is present and in which the double bond is terminal. For this purpose, compounds can be used which contain a carboxylate group linked directly to the >C=C< group, such as methyl acrylate, as well as compounds with a carboxylate group linked via a hydrocarbyl bridging group to the >C=C< group, such as 10-undecenoic acid and its methyl ester.

Application of the aforementioned catalyst compositions to monomer mixtures which in addition to carbon monoxide and ethylene contain either one or more A monomers or one or more B monomers results in linear polymers being obtained which are built up of units with the formula -(CO)-(C₂H₄)- and units with the formula -(CO)-A'- or -(CO)-B'- respectively, in which A' and B' represent monomer units originating from the applied A and B monomers respectively. The higher the concentration ratio between the A or B monomers and ethylene in the monomer mixtures from which these polymers are prepared, the fewer -(CO)-(C₂H₄)- units will be contained on average per -(CO)-A'- or -(CO)-B'- unit in the polymers. With regard to the preparation of the aforesaid polymers, there is particular interest in polymers containing on average fewer than 1000 -(CO)-(C₂H₄)- units per -(CO)-A'- or -(CO)-B'- unit.

Attempts to obtain polymers related with the polymers described hereinbefore, by including in the monomer mixture from which the polymers are prepared, instead of type A compounds, mono-olefins in which the double bond is not terminal or, instead of type B compounds, mono-olefinically unsaturated compounds in which one or two carboxylate groups are present and in which compounds the double bond is not terminal, were until recently unsuccessful. Application of the aforesaid catalyst compositions to monomer mixtures which in addition to carbon monoxide and one or more 1-monoalkenes (indicated as D for short), also contain one or more mono-olefinically unsaturated compounds (indicated as E for short), in which compounds the double bond is not terminal and which compounds contain one or two carboxylate groups, produce polymers which contain on average more than 2000 -(CO)-D'- units per -(CO)-E'- unit. In the formulae, D' and E' represent monomer units originating from applied monomers D and E respectively. In view of the extremely small amounts of E monomers which can be incorporated into the polymers in this way, the thus obtained polymers can hardly be considered as modified carbon monoxide/alpha-olefin polymers.

Further research into this subject has unexpectedly revealed that from monomer mixtures containing, besides carbon monoxide and one or more D monomers, one or more E monomers, linear polymers can be prepared which are built up of units with the formula -(CO)-D'-and units with the formula -(CO)-E'-, which polymers contain on average fewer than 1000 -(CO)-D'- units per -(CO)-E'- unit, provided that in the catalyst compositions described hereinbefore having an anion of an acid with a pKa of less than 4 as component b), the diphosphine used as component c) is replaced by a nitrogen containing compound with the general formula 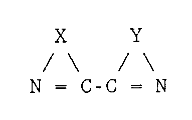
in which X and Y represent the same or different organic bridging groups which each contain three or four atoms in the bridge, of which at least two are carbon atoms. Since, in the preparation of the present polymers, E monomers are used in which the carboxylate groups are present in the form of carboxylic acid, anhydride or lactone groups or as ester groups linked to the >C=C< group via a hydrocarbyl bridge group, the polymers obtained are new materials.

The present patent application therefore relates to polymers of carbon monoxide with one or more 1-monoalkenes and with one or more other mono-olefinically unsaturated compounds, characterized in that
a) they are obtainable by polymerization of carbon monoxide with one or more 1-monoalkenes (D) and with one or more mono-olefinically unsaturated compounds (E) in which compounds the double bond does not occur terminally and which compounds contain one or two carboxylate group(s) which is/are present therein either in the form of carboxylic acid, anhydride or lactone group(s) or as ester group(s), which polymerization is carried out in the presence of a catalyst composition on the basis of:
   (a) a palladium compound,
   (b) an anion of an acid with a pKa of less than 4, and
   (c) a compound with the general formula 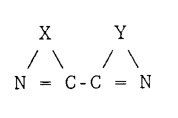 in which X and Y represent the same or different organic bridging groups which each contain three or four atoms in the bridge, of which at least two are carbon atoms,
b) they possess a linear structure,
c) they are built up of units with the formula -(CO)-D'- and units with the formula -(CO)-E'- in such a manner that in the polymers the units -CO- alternate with the units -D'- or -E'-, in which D' and E' represent monomer units originating from applied monomers D and E respectively, and
d) they contain on average fewer than 1000 -(CO)-D'- units per -(CO)-E'- unit.

The polymers according to the invention preferably contain on average fewer than 750 and in particular fewer than 500 -(CO)-D'-units per -(CO)-E'- unit. The D and E monomers used in the process according to the invention preferably contain a maximum of 10 carbon atoms per molecule. Another preferred process uses as starting materials a monomer mixture containing just one D monomer and just one E monomer. Examples of suitable 1-monoalkenes for application as monomer D in the process according to the invention are ethylene, propylene and butene-1. Preference is given to ethylene. Examples of suitable mono-olefins for application as monomer E are unsaturated monocarboxylic acids such as crotonic acid, alkyl esters of unsaturated monocarboxylic acids such as methyl crotonate and methyl pentene-3-oate, unsaturated dicarboxylic acids such as maleic acid and fumaric acid, monoalkyl esters of unsaturated dicarboxylic acids such as monomethyl maleate and monomethyl fumarate, dialkyl esters of unsaturated dicarboxylic acids such as dimethyl maleate, dimethyl fumarate and dimethyl hexene-3-dioate, anhydrides of unsaturated dicarboxylic acids such as maleic acid anhydride and lactones of unsaturated hydroxymonocarboxylic acids such as the lactone of γ-hydroxycrotonic acid. Maleic acid anhydride is a preferred monomer E. Since in the process according to the invention use is made of an E monomer containing one or two carboxylate groups, polymers are obtained which contain as functional groups, besides carbonyl groups, carboxylate groups. These carboxylate groups may, just as the carbonyl groups, be at least partly converted by chemical modification into other functional groups. For example, carboxylic acid ester groups which can occur in the polymers may be converted by saponification into carboxylic acid groups.

As indicated hereinbefore, the polymer according to the invention is obtainable under the application of a catalyst composition on the basis of
a) a palladium compound,
b) an anion of an acid with a pKa of less than 4, and
c) a compound with the general formula 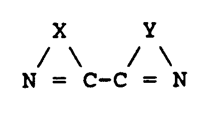 in which X and Y have the meaning indicated hereinbefore.

The palladium compound used in the catalyst compositions as component a) is preferably a palladium salt of a carboxylic acid and in particular palladium acetate.

Some examples of acids with a pKa of less than 4 (measured in aqueous solution at 18°C), whose anion should be present in the catalyst compositions as component b), are mineral acids such as perchloric acid, sulphuric acid, phosphoric acid and nitrous acid, sulphonic acids such as 2-hydroxypropane-2-sulphonic acid, para-toluene sulphonic acid, methane sulphonic acid and trifluoromethane sulphonic acid and carboxylic acids such as trifluoroacetic acid, trichloroacetic acid, dichloroacetic acid, difluoroacetic acid, tartaric acid and 2,5-dihydroxybenzoic acid.

Preferably, the catalyst composition contains as component b) an anion of an acid with a pKa of less than 2 and in particular an anion of a sulphonic acid such as para-toluene sulphonic acid or an anion of a carboxylic acid such as trifluoroacetic acid. Component b) is preferably present in the catalyst compositions in a quantity of 0.5 to 200 and in particular 1.0 to 100 equivalents per gat palladium. Component b) may be incorporated in the catalyst compositions in the form of an acid or in the form of a salt. Possible salts are non-noble transition metal salts. If component b) is applied as a salt of a non-noble transition metal, preference is given to a copper, especially a cupric salt. If desired, components a) and b) can be combined in a single compound. An example of such a compound is palladium para-tosylate.

Component c) is preferably present in the catalyst compositions in a quantity of 0.5-200 and in particular 1-50 moles per mol palladium compound. Bridging groups X and Y in component c) are linked to each other via the two carbon atoms shown in the general formula. Besides these bonds, there may also be an additional bond between bridging groups X and Y such as in 1,10-phenantroline and compounds derived therefrom. If besides carbon atoms, bridging groups X and Y also contain other atoms, these atoms are preferably nitrogen atoms. There is also preference for components c) in which bridge groups X and Y are the same. Examples of suitable components c) are 2,2′-bipyridine and compounds derived therefrom, such as
4,4′-dimethyl-2,2′-bipyridine,
4,4′-dichloro-2,2′-bipyridine,
4,4′-dimethoxy-2,2′-bipyridine,and
4,4′-dicarboxy-2,2′-bipyridine.

Further examples of suitable components c) are 1,10-phenantroline and compounds derived therefrom, such as
5-chloro-1,10-phenantroline,
4,7-diphenyl-1,10-phenantroline,
4,7-dimethyl-1,10-phenantroline,
2,9-dichloro-1,10-phenantroline,
1,10-phenantroline-5-sulphonic acid and
4,7-diphenyl-1,10-phenantroline disulphonic acids.

Examples of other suitable components c) are 2,2′-biquinoline,
2-(2-pyridyl) benzimidazole and
3-(2-pyridyl)-5,6-diphenyl-1,2,4-triazine.

An optionally substituted 2,2′-bipyridine or an optionally substituted 1,10-phenantroline is preferred as component c). 2,2′-bipyridine and 1,10-phenantroline are particularly preferred.

An organic oxidizing agent is suitably included in the catalyst compositions as component d).

Examples of organic oxidizing agents which can be used as component d) in the catalyst compositions are 1,2- and 1,4-quinones, aliphatic nitrites such as methyl nitrite, ethyl nitrite, propyl nitrite and butyl nitrite, aromatic nitro compounds such as nitrobenzene, nitrotoluene and nitrochlorobenzene and peroxides such as di-tert.butyl peroxide and dicumyl peroxide. Quinones are preferred, and in particular 1,4-quinones. Besides optionally substituted benzoquinones, other quinones such as optionally substituted naphthoquinones and anthraquinones may also be used. Preferably, 1,4-benzoquinone or 1,4-naphthoquinone is used as component d).

The quantity of organic oxidizing agent used is preferably 1-10000 and in particular 10-5000 moles per gat palladium.

The preparation of the polymers according to the invention is preferably carried out by contacting the monomers with a solution of the catalyst composition in a diluent in which the polymers are almost or entirely insoluble. During the polymerization the polymers are obtained in the form of a suspension in the diluent. Examples of suitable diluents are lower alcohols such as methanol and ethanol. The polymerization can take place either batchwise or continuously. If desired, the polymerization can also be carried out in the gas phase.

The quantity of catalyst composition used in the preparation of the polymers can vary within wide limits. Per mol olefinically unsaturated compound to be polymerized, a quantity of catalyst is used which preferably contains 10⁻⁷ -10⁻³ and in particular 10⁻⁶ -10⁻⁴ gat palladium.

The preparation of the polymers is preferably carried out at a temperature of 20-200 °C and a pressure of 1-200 bar and in particular at a temperature of 30-150 °C and a pressure of 20-100 bar. The molar ratio of the olefinically unsaturated compounds relative to carbon monoxide in the mixture to be polymerized is preferably 10:1-1:5 and in particular 5:1-1:2. The carbon monoxide used in the preparation of the polymers according to the invention does not need to be pure. It may contain impurities such as hydrogen, carbon dioxide and nitrogen.

The invention will now be illustrated with reference to the following examples.

### Example 1

A carbon monoxide/ethylene/methyl acrylate terpolymer was prepared as follows. Into a stirred autoclave with a volume of 250 ml was introduced a catalyst solution consisting of
40 ml methanol,
0.1 mmol palladium acetate,
2 mmol cupric para-tosylate and
0.15 mmol 1,3-bis(diphenylphosphino)propane.

After 20 ml methyl acrylate had been introduced into the autoclave, air was removed by evacuation. Carbon monoxide was then forced in until a pressure of 25 bar was reached and then ethylene until a pressure of 50 bar was reached. Finally, the contents of the autoclave were heated to 90 °C. After 5 hours, polymerization was ended by cooling to room temperature and releasing the pressure. The polymer was filtered off, washed with methanol and dried under vacuum at room temperature.

8.2 g Terpolymer was obtained.

### Example 2

A carbon monoxide/ethylene/methyl ester of 10-undecenoic acid was prepared in virtually the same manner as the terpolymer in example 1, but with the following differences:
a) 30 ml methyl ester of 10-undecenoic acid was introduced into the autoclave instead of 20 ml methyl acrylate, and
b) the reaction time was ½ hour instead of 5 hours.

7.1 g Terpolymer was obtained.

### Example 3

A carbon monoxide/ethylene/10-undecenoic acid terpolymer was prepared in virtually the same manner as the terpolymer in example 1, but with the following differences:
a) 20 ml 10-undecenoic acid was introduced into the autoclave instead of 20 ml methyl acrylate,
b) the catalyst solution contained 50 ml methanol instead of 40 ml and 2 mmol trifluoroacetic acid instead of cupric para-tosylate,
c) carbon monoxide was forced into the autoclave until a pressure of 30 bar was reached and then ethylene until a pressure of 50 bar was reached, and
d) the reaction temperature was 80 °C instead of 90 °C.

20.6 g Terpolymer was obtained.

### Example 4

A carbon monoxide/ethylene/maleic acid anhydride terpolymer was prepared in virtually the same manner as the terpolymer in example 1, but with the following differences:
a) 10 ml maleic acid anhydride was introduced into the autoclave instead of 20 ml methyl acrylate,
b) the catalyst solution contained a mixture of 30 ml methanol and 40 ml tetrahydrofurane instead of 40 ml methanol, and
c) carbon monoxide was forced into the autoclave until a pressure of 30 bar was reached and then ethylene until a pressure of 45 bar was reached.

8.5 g terpolymer was obtained.

### Example 5

A carbon monoxide/ethylene/maleic acid anhydride terpolymer was prepared in a virtually analogous manner as the terpolymer in example 1, but with the following differences:
a) 10 ml maleic acid anhydride was introduced into the autoclave instead of 20 ml methyl acrylate,
b) a catalyst solution was used consisting of
   40 ml tetrahydrofurane,
   30 ml methanol,
   0.1 mmol palladium acetate,
   1 mmol para-toluene sulphonic acid,
   3 mmol 2,2'-bipyridine, and
   20 mmol 1,4-benzoquinone, and
c) carbon monoxide was forced into the autoclave until a pressure of 30 bar was reached and then ethylene until a pressure of 45 bar was reached.

5.7 g Terpolymer was obtained.

It was established with the aid of ¹³C NMR analysis that the terpolymers of carbon monoxide with ethylene and with a compound of the type B or E as third monomer, prepared according to examples 1-5, had a linear structure and were built up of units with the formula -(CO)-(C₂H₄)- and units with the formula -(CO)-B'-or -(CO)-E'- respectively, which units occurred at random in the terpolymers. On the basis of the ¹³C NMR analysis data, it was established for each of the terpolymers prepared according to examples 1-5 how many units with formula -(CO)-(C₂H₄)- occurred on average per unit of -(CO)-B'- or -(CO)-E'-. The results are given in the following table.

**Table**

| Example No. | Average number of -(CO)-(C₂H₄)- units per unit of -(CO)-B'- or -(CO)-E'- |
|---|---|
| 1 | 23 |
| 2 | 22 |
| 3 | 60 |
| 4 | >2000 |
| 5 | 83 |

Of examples 1-5, only example 5 is according to the invention. In this example, a terpolymer of carbon monoxide with ethylene and with a third monomer E (maleic acid anhydride) was prepared in the presence of catalyst compositions containing 2,2'-bipyridine as component c), which terpolymer contained on average less than 1000 -(CO)-(C₂H₄)- units per -(CO)-E'- unit. Examples 1-4 fall outside the scope of the invention, and are included for the purpose of comparison. In these examples, terpolymers of carbon monoxide with ethylene and with a third monomer B (methyl acrylate, 10-undecenoic acid or the methyl ester of 10-undecenoic acid) or E (maleic acid anhydride or butene-2) were prepared in the presence of catalyst compositions containing 1,3-bis(diphenylphosphino)propane as component c). Examples 1-3 demonstrate the suitability of diphosphine containing catalyst compositions for the preparation of terpolymers of carbon monoxide with ethylene and with a mono-olefin (B) in which a carboxylate group is present and with a terminal double bond. It is possible, both with a compound in which a carboxylate group occurs which is linked directly to the >C=C< group (methyl acrylate) and with compounds in which a carboxylate group occurs which is linked to the >C=C< group via a hydrocarbon bridge group (10-undecenoic acid and the methyl ester thereof), to prepare terpolymers containing on average fewer than 1000 -(CO)-(C₂H₄)- units per -(CO)-B'- unit. Although according to example 4 a terpolymer of carbon monoxide with ethylene and with a third monomer E was prepared in the presence of catalyst compositions containing a diphosphine as component c), this terpolymer contained on average more than 2000 -(CO)-(C₂H₄)- units per -(CO)-E'- unit.

## Claims

1. Polymers of carbon monoxide with one or more 1-monoalkenes and with one or more other mono-olefinically unsaturated compounds, characterized in that
a) they are obtainable by polymerization of carbon monoxide with one or more 1-monoalkenes (D) and with one or more mono-olefinically unsaturated compounds (E) in which compounds the double bond does not occur terminally and which compounds contain one or two carboxylate group(s) which is/are present therein either in the form of carboxylic acid, anhydride or lactone group(s) or as ester group(s), which polymerization is carried out in the presence of a catalyst composition on the basis of:
(a) a palladium compound,
(b) an anion of an acid with a pKa of less than 4, and
(c) a compound with the general formula 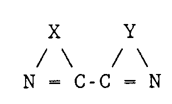 in which X and Y represent the same or different organic bridging groups which each contain three or four atoms in the bridge, of which at least two are carbon atoms,
b) they possess a linear structure,
c) they are built up of units with the formula -(CO)-D'- and units with the formula -(CO)-E'- in such a manner that in the polymers the units -CO- alternate with the units -D'- or -E'-, in which D' and E' represent monomer units originating from applied monomers D and E respectively, and
d) they contain on average fewer than 1000 -(CO)-D'- units per -(CO)-E'- unit.

2. Polymers according to claim 1, characterized in that the monomers D and E contain a maximum of 10 carbon atoms per molecule.

3. Polymers according to claim 1 or 2, characterized in that they contain ethylene as monomer D.

4. Polymers according to claim 2 or 3, characterized in that they contain maleic acid anhydride as monomer E.

5. Polymers according to any of claims 1-4, characterized in that they contain an average fewer than 500 -(CO)-D'- units per -(CO)-E'- unit.

## Patentansprüche

1. Polymere von Kohlenmonoxid mit einem oder mehreren 1-Monoalken(en) und einer oder mehreren monoolefinisch ungesättigten Verbindung(en), dadurch gekennzeichnet, daß sie
a) durch Polymerisation von Kohlenmonoxid mit einem oder mehreren 1-Monoalken(en) (D) und mit einer oder mehreren monoolefinisch ungesättigten Verbindung(en) (E) erhalten werden können, in welchen Verbindungen die Doppelbindung nicht endständig vorkommt und welche Verbindungen eine oder zwei Carboxylatgruppe(n) enthalten, die entweder in Form von Carbonsäure-, Anhydrid- oder Lactongruppe(n) oder als Estergruppe(n) darin vorliegt (vorliegen), welche Polymerisation in Gegenwart einer Katalysatorzusammensetzung auf der Basis von
(a) einer Palladiumverbindung,
(b) eines Anions einer Säure mit einem pKa-Wert von weniger als 4, und
(c) einer Verbindung der allgemeinen Formel 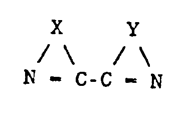 durchgeführt wird,
in welcher X und Y die gleiche oder verschiedene organische Brückengruppen darstellen, die jeweils 3 oder 4 Atome in der Brücke aufweisen, von welchen mindestens 2 Kohlenstoffatome sind,
b) eine lineare Struktur aufweisen,
c) aus Einheiten der Formel -(CO)-D'- und aus Einheiten der Formel -(CO)-E' so aufgebaut sind, daß in den Polymeren die Einheiten -CO- mit den Einheiten -D'- oder -E'- alternierend vorkommen, wobei D' und E' Monomereinheiten darstellen, die aus eingesetzten Monomeren D bzw. E stammen, und
d) durchschnittlich weniger als 1000 -(CO)-D'-Einheiten je -(CO)-E'-Einheit enthalten.

2. Polymere nach Anspruch 1, dadurch gekennzeichnet ,daß die Monomere D und E ein Maximum von 10 Kohlenstoffatomen je Molekül aufweisen.

3. Polymere nach Anspruch 1 oder 2, dadurch gekennzeichnet, daß sie Ethylen als Monomer D enthalten.

4. Polymere nach Anspruch 2 oder 3, dadurch gekennzeichnet, daß sie Maleinsäureanhydrid als Monomer E enthalten.

5. Polymere nach einem der Ansprüche 1 bis 4, dadurch gekennzeichnet, daß sie durchschnittlich weniger als 500 -(CO)-D'-Einheiten je -(CO)-E'-Einheit enthalten.

## Revendications

1. Polymères du monoxyde de carbone avec un ou plusieurs 1-monoalcènes et avec un ou plusieurs autres composés mono-oléfiniquement insaturés, caractérisés en ce que
a) ils peuvent être obtenus par polymérisation de monoxyde de carbone avec un ou plusieurs 1-monoalcènes (D) et avec un ou plusieurs composés mono-oléfiniquement insaturés (E) dans lesquels la double liaison n'est pas présente en position terminale et qui contiennent un ou deux groupes carboxyle présents sous la forme de groupes acide carboxylique, anhydride ou lactone ou sous la forme de groupes ester, la polymérisation étant conduite en présence d'une composition catalytique à base de :
(a) un composé du palladium,
(b) un anion d'un acide d'un pKa de moins de 4, et
(c) un composé de la formule générale 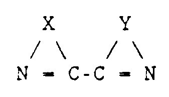 dans laquelle X et Y représentent des groupes organiques formant pont identiques ou différents qui contiennent chacun trois ou quatre atomes dans le pont, dont au moins deux sont des atomes de carbone,
b) ils possèdent une structure linéaire,
c) ils sont constitués de mailles de la formule -(CO)-D'- et de mailles de la formule -(CO)-E'- d'une manière telle que dans les polymères les mailles -CO-alternent avec les mailles -D'- ou -E'-, où D' et E' représentent des portions de monomères dérivées des monomères D et E utilisés, respectivement, et
d) ils contiennent en moyenne moins de 1000 mailles -(CO)-D'- par maille -(CO)-E'-.

2. Polymères selon la revendication 1, caractérisés en ce que les monomères D et E contiennent un maximum de 10 atomes de carbone par molécule.

3. Polymères selon la revendication 1 ou 2, caractérisés en ce qu'ils contiennent de l'éthylène comme monomère D.

4. Polymères selon la revendication 2 ou 3, caractérisés en ce qu'ils contiennent de l'anhydride d'acide maléique comme monomère E.

5. Polymères selon l'une quelconque des revendications 1-4, caractérisés en ce qu'ils contiennent en moyenne moins de 500 mailles -(CO)-D'- par maille -(CO)-E'-.
